# FASCICULE DE BREVET EUROPEEN

(11) **EP 0 606 028 B1**
(45) Date de publication et mention de la délivrance du brevet: **11.11.1998**
(21) Numéro de dépôt: 93402940.6
(22) Date de dépôt: 06.12.1993
(51) Int. Cl.: F16L 33/24, F16L 47/02, F16L 29/00, B29C 45/14, B29C 45/16

(54) **Raccord étanche d'un tube et d'un embout et son procédé de fabrication**
Abgedichtete Verbindung zwischen einem Rohr und einem Endstück und Verfahren zu deren Herstellung
Sealed connection between a pipe and a pipe end and its method of manufacture

(30) Priorité: 07.01.1993 FR 9300079
(43) Date de publication de la demande: 13.07.1994
(73) Titulaire: HUTCHINSON, F-75008 Paris (FR)
(72) Inventeur: Godeau, Denis, F-45260 Vieilles Maisons S/Joudey (FR)
(74) Mandataire: Orès, Bernard

(56) Documents cités:
- EP-A- 0 233 608
- CH-A- 617 760
- FR-A- 1 272 178
- FR-A- 1 290 344
- FR-A- 2 178 487
- FR-A- 2 184 983
- FR-A- 2 214 078
- FR-A- 2 322 058
- FR-A- 2 359 357

## Description

L'invention est relative à un raccord étanche d'un tube et d'un embout et à son procédé de fabrication.

Elle concerne, notamment, les raccords et dispositifs analogues qui trouvent application dans le compartiment moteur de véhicules automobiles sans que cette indication n'ait, cependant, quelque caractère limitatif que ce soit. Pour de telles applications, par exemple la réalisation du circuit de refroidissement d'un moteur d'automobile, un tube dans lequel circule le fluide de refroidissement doit être assemblé, à étanchéité, aux embouts d'entrée et de sortie d'un échangeur de chaleur ou aérotherme du véhicule ; cet assemblage, dont on souhaite qu'il conserve ses propriétés dans le temps, d'une part, qu'il soit facile à réaliser, d'autre part, doit encore, pour satisfaire aux desiderata des constructeurs d'automobiles, être d'un coût aussi faible que possible et pouvoir être exécuté sur des chaînes de montage très fortement automatisées. Pour remplir la condition mentionnée en dernier lieu, la Demanderesse a déjà proposé des dispositifs dans lesquels un mouvement de rapprochement en translation des deux parties d'un raccord assure l'assemblage d'un tube et d'un embout, l'étanchéité étant obtenue à l'aide d'un joint associé à l'une desdites parties, voir par exemple FR-A-2632 707 et FR-A-2656 404. Si de tels dispositifs donnent satisfaction, ils sont cependant parfois considérés comme trop coûteux pour équiper les moteurs de tous les véhicules auxquels ils pourraient être associés et cela en raison de la présence du joint de structure particulière relativement complexe et de moyens distincts de ceux du joint pour assurer la liaison entre elles des deux parties du raccord. On a également proposé, dans FR-2 636 713, un dispositif de jonction entre un tube souple et un embout rigide dans lequel une pièce de raccordement en matière plastique solidaire du tube souple présente des moyens d'accrochage sur l'embout rigide et deux lèvres d'étanchéité destinées à coopérer avec ledit embout, lequel doit alors nécessairement à la fois être de forme relativement complexe et présenter des caractéristiques dimensionnelles très précises qui en augmentent le coût.

C'est, par conséquent, un but général de l'invention de fournir un raccord étanche d'un tube et d'un embout qui ne présentent pas les limitations des dispositifs connus.

C'est, à cet égard, un but de l'invention de fournir un raccord étanche d'un tube et d'un embout d'excellente qualité, de longue durée de vie et de coût plus faible que celui des dispositifs connus.

C'est, encore, un but de l'invention de fournir un procédé de fabrication d'un tel raccord qui permette d'utiliser pour sa mise en oeuvre des éléments constitutifs comme des tubes ou embouts dont les dimensions peuvent varier en fonction des tolérances de fabrication qui leur sont propres.

C'est, également, un but de l'invention de fournir un tel procédé qui, quels que soient les éléments constitutifs pour sa mise en oeuvre, conduise à des raccords qui peuvent ensuite être assemblés dans des installations automatisées ou robotisées.

Un raccord étanche d'au moins un tube et d'au moins un embout à l'aide d'une partie moulée solidaire du tube et qui ménage des moyens assurant l'étanchéité entre ce dernier et l'embout est caractérisé, selon l'invention, en ce que ladite partie, qui est en un matériau du type élastomère ou en un matériau à propriétés analogues vulcanisé ou réticulé après moulage, est également solidaire, après vulcanisation ou réticulation, d'une bague ou manchon par l'intermédiaire duquel le tube est propre à être assemblé à l'embout.

Un choix approprié du matériau du type élastomère ou à propriétés analogues constitutif simultanément des moyens d'étanchéité entre tube et embout et des moyens de liaison entre le tube et la bague ou manchon ainsi que, le cas échéant, d'un agent d'adhérisation permet d'appliquer l'invention à des raccords dans lesquels aussi bien le tube que la bague ou manchon sont en métal, matière plastique polymérique ou en élastomère(s).

Les moyens assurant l'étanchéité sont conformés en fonction des desiderata de la pratique, et sont, par exemple, du type des joints toriques, joints à lèvre(s), ou analogues.

L'invention trouve avantageusement application pour des dispositifs d'assemblage entre eux de deux ou plusieurs tubes et embouts, de même que pour des dispositifs dont on souhaite qu'ils remplissent une fonction complémentaire, comme celle de séparer deux circuits de fluide par une membrane perforable lors du montage du raccord.

L'invention a aussi pour objet un procédé de fabrication d'un raccord tel que défini ci-dessus, caractérisé en ce que, pour réaliser les moyens assurant l'étanchéité entre le tube et l'embout et la liaison du tube à la bague ou manchon, on moule autour du tube et d'au moins un noyau amovible coopérant avec lui un matériau de type élastomère ou à propriétés analogues, lequel est ensuite vulcanisé ou réticulé.

Dans un mode d'exécution du procédé, le moulage, de préférence par injection, a lieu entre la bague ou manchon et le tube dans un moule qui les enferme tous deux.

Dans un autre mode d'exécution, on injecte d'abord dans un premier moule et autour du tube et d'au moins un noyau amovible un premier matériau destiné à former les moyens d'étanchéité et de liaison du tube et de la bague ou manchon, on effectue alors une pré-vulcanisation dudit premier matériau, on place l'ensemble obtenu dans un second moule, on injecte dans ce dernier un second matériau destiné à former la bague ou manchon ainsi surmoulé sur les moyens de liaison et d'étanchéité et on vulcanise ou réticule le tout.

Les premier et second matériaux peuvent être identiques et de préférence tous deux du type élastomère, l'injection dudit matériau étant alors conduite dans un seul et même moule et suivie d'une seule phase de vulcanisation ou réticulation.

En variante, le premier matériau est du type élastomère et le second du type plastomère.

Dans un tel cas et lorsque, complémentairement, les premier et second matériaux sont compatibles entre eux, l'invention envisage également de ne mettre en oeuvre qu'un seul moule dans lequel les matériaux sont introduits par bi-injection.

Dans ce cas, également, l'invention prévoit de tirer parti des propriétés de retrait ou d'expansion ou de compression du second matériau pour assurer la fixation de la bague ou manchon sur lesdits moyens d'étanchéité et la liaison du tube à la bague ou manchon.

Dans encore un autre mode d'exécution, la bague ou manchon est fixé par collage sur lesdits moyens d'étanchéité et de liaison du tube à la bague ou manchon, lesdits moyens étant réalisés au cours d'une étape précédant le collage.

Quel que soit le mode d'exécution du procédé, le moulage du matériau de type élastomère ou à propriétés analogues peut être conduit de manière à réaliser, -simultanément aux moyens assurant l'étanchéité entre le tube et l'embout et la liaison de la bague ou manchon au tube-, un organe auxiliaire comme une membrane d'obturation du tube.

Dans un tel cas, ce sont plusieurs noyaux amovibles qui sont associés au moule, l'utilisation de plusieurs noyaux étant également avantageuse pour la réalisation de certaines formes des moyens d'étanchéité.

L'invention sera bien comprise par la description qui suit, faite à titre d'exemple et en référence au dessin annexé, dans lequel :
- la figure 1 est une vue partie en coupe longitudinale et partie en élévation d'un raccord selon l'invention ;
- la figure 2 est une vue analogue à celle de la figure 1, mais pour une autre forme de réalisation ;
- la figure 3 est une vue en coupe transversale d'encore un autre raccord selon l'invention ;
- la figure 4 est une vue analogue à celles des figures 1 et 2 mais pour encore une autre forme de réalisation ;
- les figures 5 et 6 sont des vues schématiques, en perspective, d'encore un autre raccord selon l'invention avant et après assemblage, respectivement ;
- la figure 7 illustre un procédé de fabrication selon l'invention ;
- les figures 8 et 9 illustrent un autre mode d'exécution du procédé selon l'invention ;
- la figure 10 est relative à encore un autre mode d'exécution du procédé ;
- les figures 11 et 12 sont relatives à un autre mode d'exécution ; et
- la figure 13 illustre un procédé de fabrication d'un raccord selon la figure 4.

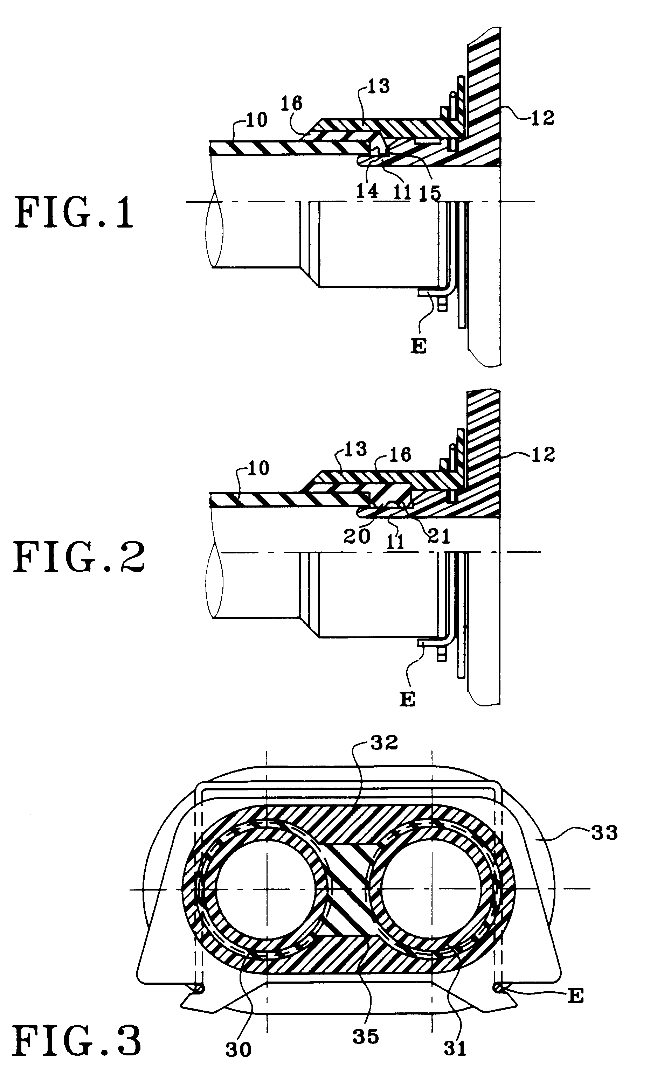

On se réfère d'abord aux figures 1 à 6 qui montrent différents raccords selon l'invention, notamment des raccords étanches propres à être utilisés dans le compartiment moteur d'un véhicule automobile, par exemple pour l'assemblage des tubes de circulation du fluide de refroidissement du moteur du véhicule aux embouts d'entrée et de sortie d'un échangeur de chaleur ou aérotherme dudit véhicule.

Dans le dispositif selon la figure 1, un tube 10 en métal, en matière plastique polymérique ou en un matériau du type élastomère, renforcé ou non, est destiné à être assemblé à un embout 11, solidaire d'une platine 12, par l'intermédiaire d'une bague 13. L'embout 11 est en le même matériau ou en un matériau différent de celui du tube 10, l'assemblage de la bague à l'embout étant obtenu à l'aide d'une épingle E, par exemple comme décrit dans FR-2 691 512 au nom de la Demanderesse. L'invention n'est, cependant, aucunement limitée à ce mode d'assemblage de la bague à l'embout, lequel assemblage peut être du type à collier, ou à clips, etc...

Conformément à l'invention, l'étanchéité axiale entre le tube 10 et l'embout 11 est obtenue par une lèvre d'étanchéité 14, -qui coopère avec un épaulement 15 de l'embout-, et qui est d'une pièce avec une partie annulaire 16 formant les moyens de liaison du tube 10 et de la bague 13, le matériau constitutif de la partie 16 étant avantageusement du type élastomère ou un matériau à propriétés analogues mis en forme par moulage, de préférence moulage par injection, puis vulcanisé ou réticulé.

Dans la réalisation selon la figure 2, -où les parties analogues à celles de la réalisation précédente portent les mêmes références-, l'étanchéité radiale entre le tube 10 et l'embout 11 résulte de l'écrasement de bourrelets 20 et 21 qui sont d'une pièce avec la partie 16 interposée entre le tube 10 et la bague 13.

Dans la réalisation selon la figure 3, deux tubes 30 et 31 sont destinés à être raccordés à étanchéité à deux embouts sensiblement parallèles, non représentés, l'assemblage ayant lieu par l'intermédiaire d'une bague 32 réunie par une épingle E à une embase 33 qui porte les embouts. Conformément à l'invention, les tubes 30 et 31 sont liés à la bague 32 par des moyens 35 qui assurent simultanément l'étanchéité entre les tubes et les embouts et qui sont mis en forme par moulage, de préférence moulage par injection, d'un matériau du type élastomère ou à propriétés analogues qui est ensuite vulcanisé ou réticulé.

Quelle que soit la réalisation, les qualités naturelles du matériau élastomère mis en oeuvre permettent d'obtenir, d'une part, une excellente étanchéité, y compris en présence d'un débattement angulaire des éléments constitutifs du raccord et, d'autre part, de garantir un montage satisfaisant dans un domaine relativement large de tolérances radiales aussi bien des tubes que des embouts. En outre, l'absence de joint d'étanchéité indépendant, comme requis dans les raccords connus, permet de faciliter le montage du raccord, d'en réduire le coût et de n'avoir à exercer que de faibles efforts de montage, en particulier dans le dispositif à étanchéité axiale tel qu'illustré sur la figure 1.

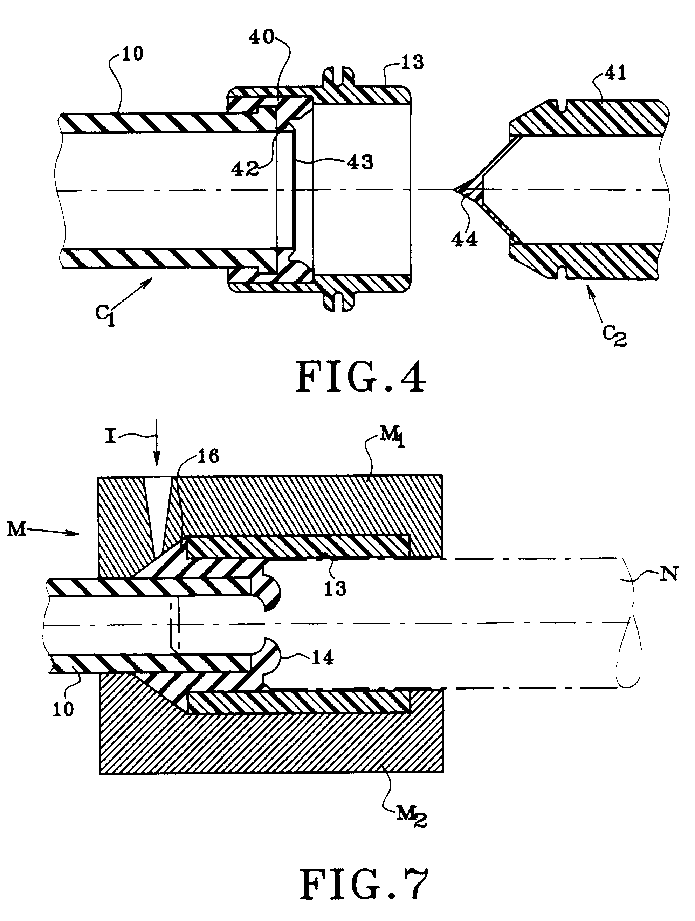

Dans la forme de réalisation illustrée sur la figure 4, au tube 10 et à la bague 13 sont associés des moyens 40 qui assurent la liaison de la bague et du tube, d'une part, l'étanchéité entre le tube 10 et un embout 41 par une lèvre 42, d'autre part, ainsi que, complémentairement, la séparation du circuit de fluide C₁ associé au tube et du circuit C₂ associé à l'embout par l'intermédiaire d'une membrane 43 d'une pièce avec les moyens 40 et qui ferme le tube 10 aussi longtemps qu'elle n'est pas percée par un perforateur 44 prévu sur l'embout 41.

Dans la forme de réalisation illustrée sur les figures 5 et 6, -et où les parties analogues à celles de la réalisation selon la figure 3 portent les mêmes références-, une platine ou embase 33 porte les embouts 34 et 34', sensiblement parallèles, destinés à être raccordés à étanchéité aux tubes 30 et 31, respectivement. La liaison a lieu par l'intermédiaire de manchons 36 et 36' propres à être assemblés aux embouts 34, 34' par une épingle E logée dans une gorge g des manchons et qui, dans la condition de montage, figure 6, est immobilisée par des collets c et c' des embouts 34 et 34'. Conformément à l'invention, les tubes 30 et 31 sont liés aux manchons 36 et 36' par des moyens 35 qui assurent simultanément l'étanchéité entre les tubes et les embouts et qui sont mis en forme par moulage, de préférence moulage par injection, d'un matériau du type élastomère ou à propriétés analogues, qui est ensuite vulcanisé ou réticulé. Comme bien visible sur les figures 5 et 6, les manchons 36, 36' comportent chacun une partie comme 37 sur laquelle est emmanchée jusqu'à venir au contact d'une butée B l'extrémité du tube 30, une partie 38 cylindrique sensiblement dans le prolongement de la partie d'extrémité de tube 30 emmanchée sur la partie 37 et des ouvertures périphériques comme 39, remplies par le matériau constitutif des moyens 35, lesquels règnent ainsi à la fois à l'extérieur des tubes 30, 31 et des manchons 36, 36' et à l'intérieur desdits manchons où ils ménagent des organes d'étanchéité radiale comme des bourrelets b obtenus lors du moulage dudit matériau.

Des raccords étanches qui satisfont aux critères rigoureux imposés par les constructeurs d'automobiles ont été obtenus avec des tubes 10 ou 30, 31 et des embouts 11, 34, 34', 41 en métal, en matériau du type élastomère, renforcé ou non, comme du caoutchouc EPDM ou silicone, ou encore en une matière plastique polymérique, comme du polyamide, etc..., la bague 13 ou les manchons 36, 36' étant en métal, par exemple en aluminium ou en acier inox, ou en matériau du type élastomère comme du caoutchouc EPDM, ou en matière plastique du type plastomère comme du polyamide, les moyens assurant l'étanchéité entre le(s) tube(s) et le ou les embout(s) simultanément à la liaison de la bague ou manchon au(x) tube(s) étant choisis de préférence parmi les matériaux du type élastomère comme les caoutchoucs EPDM, ou silicone avec, le cas échéant, interposition d'un agent d'adhérisation, comme celui connu sous le nom de CHEMOSIL.

Pour la fabrication d'un raccord étanche du type montré sur les figures 1 à 6, l'invention propose de réaliser les moyens assurant l'étanchéité entre le(s) tube(s) et le ou les embout(s), -et qui peuvent être de tout type approprié-, simultanément à la liaison de la bague ou manchon au tube par moulage autour du tube et d'au moins un noyau amovible coopérant avec lui d'un matériau du type élastomère ou à propriétés analogues, lequel est ensuite vulcanisé ou réticulé.

Dans un premier mode d'exécution, figure 7, un tube 10 dont la surface extérieure est nettoyée et brossée est enfilé sur un noyau amovible N, tandis que la bague 13 est garnie, au voisinage de son extrémité prévue pour entourer le tube 10, d'un agent d'adhérisation, comme du CHEMOSIL. Après mise en place de la bague 13 et de l'ensemble tube 10/noyau N dans un moule M en deux parties M₁ et M₂, on injecte dans le moule, comme montré par la flèche I, un matériau de type élastomère ou à propriétés analogues destiné à former les moyens 16 de liaison de la bague au tube et les moyens d'étanchéité 14 (ici du type joint à lèvre) entre le tube et un embout, cette phase d'injection étant suivie d'une phase de vulcanisation ou de réticulation du matériau injecté, elle-même suivie de l'ouverture du moule et de l'extraction du noyau amovible N de l'ensemble ainsi formé.

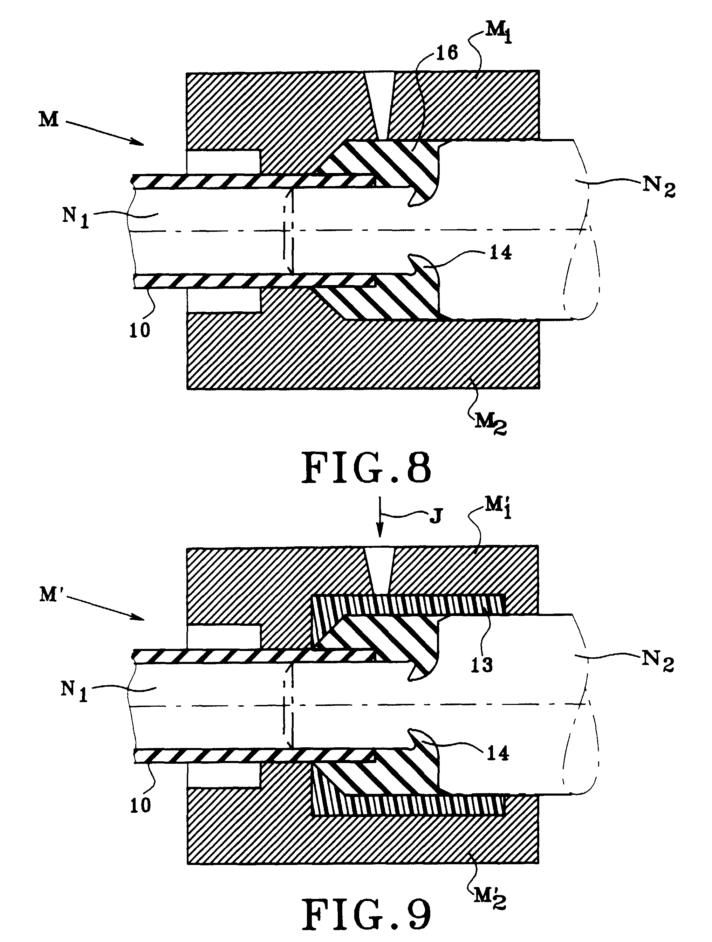

Dans le mode d'exécution du procédé illustré sur les figures 8 et 9, où les parties analogues à celles de la figure 7 portent les mêmes références, on fabrique d'abord, sur le tube 10, les moyens 16 et les moyens d'étanchéité 14 en injectant, au cours d'une première phase et dans le moule M où a été placé le tube enfilé sur un noyau amovible N₁, un matériau du type élastomère ou à propriétés analogues qui est ensuite pré-vulcanisé. L'ensemble ainsi obtenu est alors placé dans un second moule M' (en deux parties M'₁ et M'₂) où est injecté, comme montré par la flèche J, un matériau destiné à former la bague 13, l'injection étant suivie d'une phase de vulcanisation ou de réticulation en fonction de la nature des matériaux mis en oeuvre.

Dans une première variante d'exécution du procédé, on garnit la surface extérieure des moyens 16 d'un agent d'adhérisation avant de procéder au moulage du second matériau.

Dans une autre variante du procédé, et lorsque les premier et second matériaux sont compatibles entre eux, le moulage a lieu dans un seul et même moule par bi-injection des matériaux utilisés, la réalisation des moyens d'étanchéité précédant celle de formation de la bague.

Que cette dernière soit réalisée par la technique de bi-injection qui vient d'être mentionnée ou dans un procédé à deux étapes de moulage, l'invention prévoit de tirer parti des propriétés de retrait, ou d'expansion, ou de compression du matériau constitutif de la bague 13 pour assurer la fixation de ladite bague sur les moyens 16 de liaison de la bague au tube.

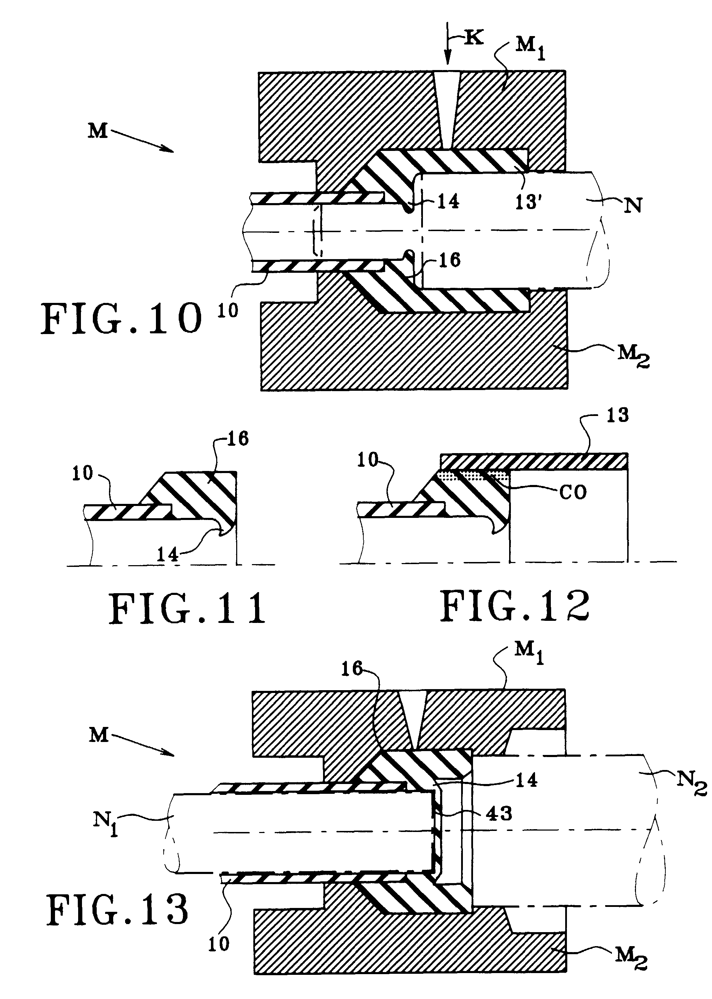

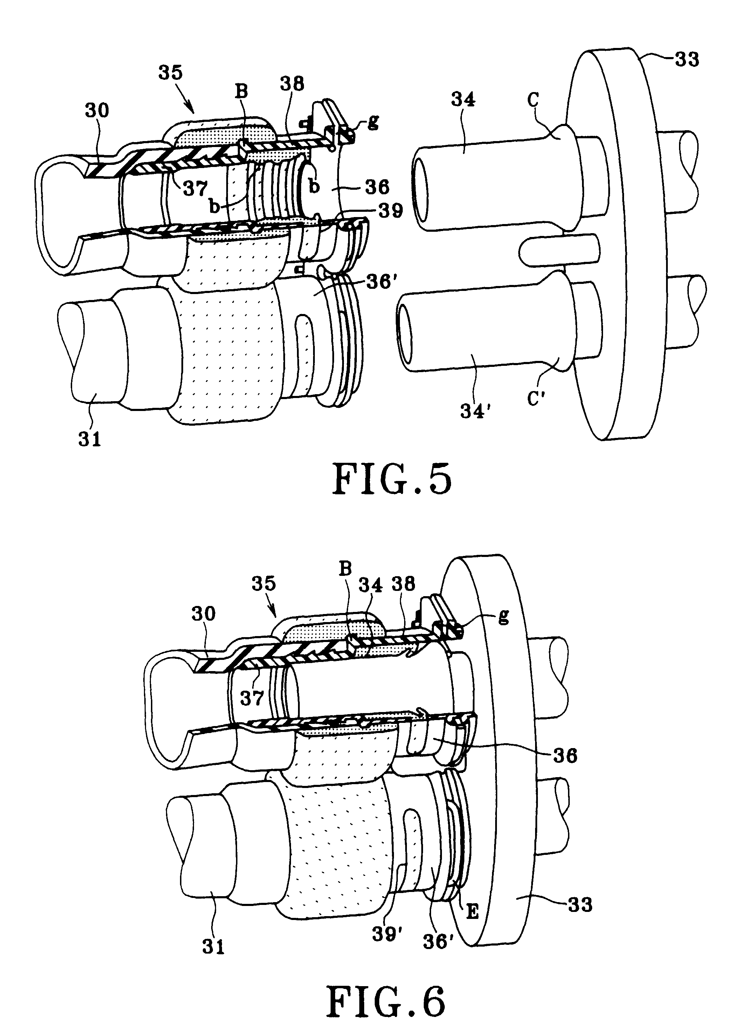

Dans le mode d'exécution illustré sur la figure 10 la bague 13', -analogue à la bague 13 des réalisations précédentes-, est monobloc (d'une pièce) avec les moyens 16 de liaison du tube 10 à un embout et de la lèvre 14 formant les moyens d'étanchéité entre le tube et ledit embout, les moyens 16, la lèvre 14 et la bague 13' étant réalisés par injection, dans un moule M où a été placé le tube 10 enfilé sur le noyau amovible N, d'un matériau du type élastomère ou à propriétés analogues, comme montré par la flèche K, lequel est ensuite vulcanisé ou réticulé.

Dans un autre mode d'exécution, illustré schématiquement sur les figures 11 et 12, la bague 13 est fixée par collage (comme montré schématiquement par les pointillés co) sur la surface externe d'une partie 16 servant à la liaison du tube 10 à la bague 13 et qui comporte en outre, d'une pièce avec elle, un organe d'étanchéité comme une lèvre 14.

L'invention n'est pas limitée à la fabrication de raccords comprenant seulement un ou des tube(s) et un ou des embout(s) mais trouve aussi avantageusement application pour la fabrication d'un dispositif comme montré sur la figure 4. Pour une telle fabrication, l'invention propose de mettre en oeuvre l'un quelconque des modes d'exécution du procédé décrit ci-dessus, pour former la membrane 43 monobloc avec les moyens 16 assurant la liaison du tube 10 à une bague et les moyens comme une lèvre 14 assurant l'étanchéité dudit tube et de l'embout avec lequel il est destiné à coopérer; (voir la figure 13).

## Revendications

1. Raccord étanche d' au moins un tube (10, 30, 31) et d'au moins un embout (11 ; 34, 34'; 41) à l'aide d'une partie moulée (16 ; 35 ; 40) solidaire du tube (10, 30, 31) qui ménage des moyens (14 ; 20, 21 ; 42, b) assurant l'étanchéité entre le tube (10, 30, 31) et l'embout (11 ; 34, 34' ; 41), caractérisé en ce que ladite partie (16, 35), qui est en un matériau du type élastomère ou en un matériau à propriétés analogues vulcanisé ou réticulé après moulage, est également solidaire, après vulcanisation ou réticulation, d'une bague ou manchon (13, 36, 36') par l'intermédiaire duquel le tube (10, 30, 31) est propre à être assemblé à l'embout (11 ; 34, 34' ; 41).

2. Raccord selon la revendication 1, caractérisé en ce que le tube (10, 30, 31) et la bague ou manchon (13, 36, 36') sont en métal, en matière plastique polymérique ou en elastomère(s).

3. Raccord selon l'une quelconque des revendications précédentes pour au moins deux tubes (30, 31), caractérisé en ce qu'il comprend des moyens (35) assurant, d'une part, l'étanchéité entre les tubes (30, 31) et des embouts (34, 34') et, d'autre part, la liaison entre lesdits tubes (30, 31) et une bague (32) ou des manchons (36, 36') (figures 3, 5 et 6).

4. Raccord selon la revendication 3, caractérisé en ce que les manchons (36, 36') comportent chacun une partie (37) sur laquelle est emmanchée, -jusqu'à venir au contact d'une butée (B) du manchon-, la partie d'extrémité des tubes (30, 31) et une partie (38) sensiblement dans le prolongement de ladite partie d'extrémité emmanchée desdits tubes (30, 31), les autres moyens (35) étant ainsi à la fois extérieurs et intérieurs aux manchons (36, 36') qu'ils traversent par des ouvertures (39).

5. Raccord selon l'une quelconque des revendications précédentes, caractérisé en ce qu'il comprend en outre au moins une membrane perforable (43) obturant un ou les tube(s) (10) aussi longtemps que le raccord n'est pas monté.

6. Procédé de fabrication d'un raccord selon l'une quelconque des revendications précédentes, caractérisé en ce que pour réaliser les moyens (14, 16 35 ; 42, 40 ; e) assurant l'étanchéité entre au moins un tube (10, 30, 31) et au moins un embout (11, 34, 41) ainsi que la liaison de la bague ou manchon (13, 36, 36') au tube, on moule autour de ce dernier, et d'au moins un noyau amovible (N) coopérant avec lui, un matériau de type élastomère ou à propriétés analogues, lequel est ensuite vulcanisé ou réticulé.

7. Procédé selon la revendication 6, caractérisé en ce que le moulage, de préférence par injection, a lieu entre la bague ou manchon (13, 36, 36') et le tube (10, 30, 31) dans un moule (M) qui les enferme tous les deux.

8. Procédé selon la revendication 6, caractérisé en ce qu'on injecte d'abord dans un premier moule (M) et autour du tube (10) et d'au moins un noyau amovible (N₁) un premier matériau destiné à former les moyens d'étanchéité (14) et de liaison (16) du tube et de la bague, en ce qu'on effectue alors une pré-vulcanisation dudit premier matériau, en ce qu'on place l'ensemble obtenu dans un second moule (M') , en ce qu'on injecte dans ce dernier un second matériau destiné à former la bague (13) ainsi surmoulée sur les moyens de liaison et d'étanchéité et en ce qu'on vulcanise ou réticule le tout.

9. Procédé selon la revendication 8, caractérisé en ce que les premier et second matériaux sont identiques et du type élastomérique, leur injection étant conduite dans un seul et même moule (M) pour former, sans pré-vulcanisation, les moyens d'étanchéité et de liaison (14,16) et la bague (13) et étant suivie d'une seule phase de vulcanisation ou réticulation.

10. Procédé selon la revendication 8, caractérisé en ce que le premier matériau est du type des élastomères et le second du type des plastomères.

11. Procédé selon la revendication 8 ou 10, caractérisé en ce que, lorsque les deux matériaux sont compatibles entre eux, il est mis en oeuvre par bi-injection dans un seul et même moule.

12. Procédé selon la revendication 10 ou 11, caractérisé en ce que ce sont les propriétés de retrait, d'expansion ou de compression du second matériau qui assurent la fixation de la bague ou manchon (13, 36, 36') sur lesdits moyens (16) d'étanchéité et de liaison du tube à la bague ou manchon (13, 36, 36').

13. Procédé selon la revendication 6, caractérisé en ce que la bague (13) est fixée par collage sur les moyens d'étanchéité et de liaison bague/tube (figures 11 et 12).

14. Procédé selon l'une quelconque des revendications 6 à 13, caractérisé en ce que le moulage du matériau du type élastomère ou à propriétés analogues est conduit de manière à réaliser, simultanément aux moyens assurant l'étanchéité entre le tube et l'embout et la liaison de la bague au tube, un organe auxiliaire comme une membrane (43) d'obturation du tube (10).

## Patentansprüche

1. Dichter Anschluss von mindestens einem Rohr (10, 30, 31) und mindestens einem Stutzen (11; 34, 34'; 41) mittels eines einstückigen, formgegossenen Teils (16; 35; 40) des Rohrs (10, 30, 31), wobei der Anschluss Mittel (14; 20, 21; 42, b) zur Verfügung stellt, die die Dichtigkeit zwischen dem Rohr (10, 30, 31) und dem Stutzen (11; 34, 34'; 41) gewährleisten, dadurch gekennzeichnet, dass der Teil (16, 35), der aus einem Material von der Art eines Elastomers der aus einem Material mit ähnlichen Eigenschaften besteht und nach dem Formgießen vulkanisiert der vernetzt worden ist, nach dem Vulkanisieren oder Vernetzen ebenfalls mit einem Ring oder einer Muffe (13, 36, 36') einstückig ist, mittels derer das Rohr (10, 30, 31) am Stutzen (11; 34, 34'; 41) anbringbar ist.

2. Anschluss nach Anspruch 1, dadurch gekennzeichnet, dass das Rohr (10, 30, 31) und der Ring oder die Muffe (13, 36, 36') aus Metall, aus Polymer-Kunststoff oder aus Elastomer(en) bestehen.

3. Anschluss nach einem der vorhergehenden Ansprüche für mindestens zwei Rohre (30, 31), dadurch gekennzeichnet, dass er Mittel (35) aufweist, welche zum einen die Dichtigkeit zwischen den Rohren (30, 31) und den Stutzen (34, 34') und zum anderen die Verbindung zwischen den Rohren (30, 31) und einem Ring (32) oder Muffen (36, 36') gewährleisten (Abb. 3, 5, und 6).

4. Anschluss nach Anspruch 3, dadurch gekennzeichnet, dass jede der Muffen (36, 36') einen Teil (37), auf den der Endabschnitt der Rohre (30, 31) bis zur Berührung mit einer Anschlagfläche (B) der Muffe aufgesetzt ist, sowie einen in etwa in der Verlängerung des aufgesetzten Endabschnitts der Rohre (30, 31) liegenden Teil (38) aufweist, wobei die anderen Mittel (35) gleichzeitig so außen und innen an den Muffen (36, 36') angeordnet sind, welche sie durch Öffnungen (39) durchsetzen.

5. Anschluss nach einem der vorhergehenden Ansprüche, dadurch gekennzeichnet, dass er des Weiteren mindestens eine perforierbare Membran (43) aufweist, welche ein Rohr (10) oder die Rohre verschließt, solange der Anschlusse nicht angebracht ist.

6. Verfahren zur Herstellung eines Anschlusses nach einem der vorhergehenden Ansprüche, dadurch gekennzeichnet, dass man zur Herstellung der Mittel (14, 16; 35; 42, 40; e), welche die Dichtigkeit zwischen mindestens einem Rohr (10, 30, 31) und mindestens einem Stutzen (11, 34, 41), wie auch die Verbindung von Ring oder Muffe (13, 36, 36') mit dem, Rohr gewährleisten, um letzteres und um mindestens einen damit zusammenwirkenden, herausnehmbaren Formkern (N) ein Material von der Art eines elastomers oder mit ähnlichen Eigenschaften formgießt, welches anschließend vulkanisiert oder vernetzt wird.

7. Verfahren nach Anspruch 6, dadurch gekennzeichnet, dass das Formgießen vorzugsweise durch Spritzgießen zwischen dem Ring oder der Muffe (13, 36, 36') und dem Rohr (10, 30, 31) in einer diese beiden umschließenden Form (M) stattfindet.

8. Verfahren nach Anspruch 6, dadurch gekennzeichnet, dass zuerst in eine erste Form (M) sowohl um das Rohr, als auch um mindestens einen herausnehmbaren Formkern (N₁) ein erstes Material eingespritzt wird, das zur Bildung der Mittel (14) zum Abdichten und der Mittel (16) zum Verbinden des Rohrs und des Rings vorgesehen ist, dass sodann ein Vorvul-Rohrs und des Rings vorgesehen ist, dass sodann ein Vorvulkanisieren des ersten Materials durchgeführt wird, dass das hergestellte Ganze in einer zweiten Form (M') angeordnet wird, dass in diese letztere ein zweites Material für die Bildung des Rings (13) eingespritzt wird, der auf diese Weise auf die Verbindungs- und Abdichtmittel aufgeformt wird, und dass das Ganze vulkanisiert oder vernetzt wird.

9. Vefahren nach Anspruch 8, dadurch gekennzeichnet, dass das erste und das zweite Material identisch und von der Art eines Elastomers sind, wobei das Spritzgießen in eine einzige und gleiche Form (M) durchgeführt wird, um ohne Vorvulkanisieren die Abdicht- und Verbindungsmittel (14, 16) und den Ring (13) zu formen, und von einem einzigen Vulkanisieroder Vernetzungsschritt gefolgt ist.

10. Verfahren, nach Anspruch 8, dadurch gekennzeichnet, dass das erste Material von der Art der Elastomere und das zweite von der Art der elastomere ist.

11. Verfahren nach Anspruch 8 oder 10, dadurch gekennzeichnet, dass es, falls die beiden Materialien miteinander kompatibel sind, durch gleichzeitiges Spritzgießen in eine einzige und gleiche Form angewendet wird.

12. Verfahren nach Anspruch 10 oder 11, dadurch gekennzeichnet, dass es die Schrumpfungs-, Ausdennungs- oder Verdichtungseingenschaften des zweiten Materials sind, welche die Befestigung von Ring oder Muffe (13, 36, 36') an den Mittel (16) zum Abdichten und Verbinden des Rohrs mit Ring oder Muffe (13, 36, 36') gewährleisten.

13. Verfahren nach Anspruch 6, dadurch gekennzeichnet, dass der Ring (13) durch Verkleben an den Mitteln zum Abdichten und zum Verbinden von Ring/Rohr befestigt wird (Abb. 11 und 12).

14. Verfahren nach einem der Ansprüche 6 bis 13, dadurch gekennzeichent, dass das Formgießen des Materials von der Art eines Elastomers oder mit ähnlichen Eigenschaften derart durchgeführt wird, dass gleichzeitig mit den Mitteln, welche die Dichtigkeit zwischen dem Rohr und dem Stutzen und die Verbindung des Rings mit dem Rohr gewährleisten, ein Hilfselement wie eine Membran (43) zum Verschießen des Rohrs (10) hergestellt wird.

## Claims

1. A waterproof coupling between at least one tube (10, 30, 31) and at least one endpiece (11; 34, 34'; 41) by means of a molded portion (16; 35; 40) secured to the tube (10, 30, 31) and providing means (14; 20, 21; 42, b) that provide sealing between the tube (10, 30, 31) and the endpieces (11; 34, 34'; 41), characterized in that said portion (16, 35) which is made of a material of the elastomer type or of a material having analogous properties, and that has been vulcanized or cross-linked after molding, is also secured, after vulcanization or cross-linking, to a ring or sleeve (13, 36, 36') by means of which the tube (10, 30, 31) is suitable for being assembled to the endpiece (11; 34, 34'; 41).

2. A coupling according to claim 1, characterized in that the tube (10, 30, 31) and the ring or sleeve (13, 36, 36') are made of metal, of polymer plastics material, or of elastomer material.

3. A coupling according to any preceding claim, for at least two tubes (30, 31), characterized in that it comprises means (35) serving firstly to provide sealing between the tubes (30, 31) and the endpieces (34, 34') and secondly to provide coupling between said tubes (30, 31) and a ring (32) or sleeves (36, 36') (Figures 3, 5, and 6).

4. A coupling according to claim 3, characterized in that each of the sleeves (36, 36') includes a portion on which the end portion of one of the tubes (30, 31) is engaged until it comes into contact with an abutment (B) of the sleeve, and a portion (38) substantially in line with said engaged end portion of each of said tubes (30, 31), the other means (35) thus extending both outside and inside the sleeves (36, 36'), passing through openings (39) therein.

5. A coupling according to any preceding claim, characterized in that it further includes at least one perforatable membrane (43) closing the tube(s) (10) until the coupling has been assembled together.

6. A method of manufacturing a coupling according to any preceding claim, characterized in that to make the means (14, 16; 35; 42, 40; b) providing sealing between at least one tube (10, 30, 31) and at least one endpiece (11, 34, 41) and also providing coupling between the ring or sleeve (13, 36, 36') and the tube, a material of the elastomer type or having analogous properties is molded around said tube and at least one removable core (N) co-operating therewith, which material is subsequently vulcanized or cross-linked.

7. A method according to claim 6, characterized in that the molding. preferably by injection molding, takes place between the ring or sleeve (13, 36, 36') and the tube (10, 30, 31) in a mold (M) which encloses both of them.

8. A method according to claim 6, characterized in that a first material for forming the sealing and coupling means (14, 16) between the tube and the ring is initially injected into a first mold (M) and around the tube (10) and at least one removable core (N₁), in that said first material is then subjected to pre-vulcanization, in that the resulting assembly is placed in a second mold (M'), in that a second material for forming the ring (13) is then injected therein, the ring thus being molded over the coupling and sealing means, and in that the entire assembly is vulcanized or cross-linked.

9. A method according to claim 8, characterized in that the first and second materials are identical and of the elastomer type, their injection being performed in a single mold (M) in order to form the ring (13) and the sealing and coupling means (14, 16) without pre-vulcanization and being followed by a single stage of vulcanization or of cross-linking.

10. A method according to claim 8, characterized in that the first material is of the elastomer type and the second is of the plastomer type.

11. A method according to claim 8 or 10, characterized in that when the two materials are mutually compatible, the method is implemented by bi-injection in a single mold.

12. A method according to claim 10 or 11, characterized in that it is the shrinkage, expansion, or compression properties of the second material that provide the fixing between the ring or sleeve (13, 36, 36') and the said means (16) for providing sealing and coupling between the tube and the ring or sleeve (13, 36, 36').

13. A method according to claim 6, characterized in that the ring (13) is fixed to the means for providing sealing and couping between the ring and the tube by means of adhesive (Figures 11 and 12).

14. A method according to any one of claims 6 to 13, characterized in that the material of the elastomer type or having analogous properties is molded in such a manner as to make an auxiliary member such as a membrane (43) for closing the tube (10) simultaneously with the means that provide sealing between the tube and the endpiece and that provide coupling between the ring and the tube.
